# FASCICULE DE BREVET EUROPEEN

(11) **EP 1 835 255 B1**
(45) Date de publication et mention de la délivrance du brevet: **04.05.2016**
(21) Numéro de dépôt: 07290313.1
(22) Date de dépôt: 13.03.2007
(51) Int. Cl.: G01B 5/12

(54) **Dispositif de mesure de cotes à l'intérieur d'un arbre creux de turbomachine aéronautique**
Vorrichtung zur Messung der internen Abmessungen einer Hohlwelle einer Turbomaschine in der Aeronautik
System for measuring internal dimensions of a hollow shaft of an aeronautical turbomachine

(30) Priorité: 14.03.2006 FR 0650864
(43) Date de publication de la demande: 19.09.2007
(73) Titulaire: SNECMA, 75015 Paris (FR)
(72) Inventeur: Feillias, Alain, 91840 Soisy sur Ecole (FR); Paillarse, Bernard, 91100 Corbeil Essonnes (FR); Lourdin, Dominique, 91490 Milly la Foret (FR); Pinchon, Christophe, 77310 Pringy (FR)
(74) Mandataire: Gevers & Orès

(56) Documents cités:
- GB-A- 2 259 770
- US-A- 5 205 047
- US-A- 6 065 219
- US-B1- 6 412 187
- US-B1- 6 560 889

## Description

La présente invention concerne le domaine des turbomachines et vise un moyen permettant de mesurer les cotes internes d'un arbre creux.

Dans une turbomachine telle qu'un moteur à turbine à gaz aéronautique, les arbres reliant les différentes roues de compresseur et de turbine sont des pièces maîtresses tournant à grande vitesse et capables de supporter des charges importantes tout en devant rester relativement légères. Leur fabrication comprend le forage d'une cavité longitudinale dans la pièce venue de forgeage et dont la surface extérieure a été préalablement usinée. Après cette opération de forage, on est amené à contrôler les cotes internes de l'arbre notamment afin de pouvoir y apporter, le cas échéant, les corrections nécessaires pour contenir l'épaisseur de la paroi dans un intervalle de tolérances déterminé.

Les moyens conventionnels, connus du déposant, de contrôle dimensionnel d'un forage sont de mises en oeuvre longues et limitées à un contrôle partiel, de l'ordre d'une dizaine de points de mesure sur un arbre de 1500 mm de long. Un moyen connu consiste à réaliser le contrôle sur une machine de type à mesure tridimensionnelle. Ces moyens impliquent en particulier la réalisation d'empreintes pour permettre la mesure dans des zones présentant des rayons de courbure ou de pentes difficiles d'accès, ce qui est une opération complexe et longue.

Le déposant s'est fixé comme objectif la création d'un système de mesure capable de contrôler les dimensions à l'intérieur d'un arbre après le forage de la cavité longitudinale.

Un autre objectif est de pouvoir effectuer les opérations de contrôle alors que la pièce est encore en place sur la machine d'usinage, sans avoir à la déplacer sur une installation spécifique de mesure.

Un autre objectif est de pouvoir effectuer les mesures à une vitesse plus élevée qu'auparavant et sur un grand nombre de points.

Un autre objectif est de permettre les recalages par rapport à l'alésage initial lors des reprises de finition.

On parvient à réaliser ces objectifs avec un système de mesure revendiqué par la revendication 1.

De préférence le module comprend un organe de palpage mécanique mobile entre une position rétractée et une position en extension de palpage de la surface interne de la cavité. Cette disposition permet de mettre en place le module à l'intérieur de la cavité avec précision sans avoir à tenir compte d'un risque d'endommagement de l'organe de mesure.

Conformément à une autre caractéristique, l'organe est mis en position par des moyens de commande dont l'alimentation en énergie est incorporée au dit module de mesure.

Conformément à une autre caractéristique, la machine d'usinage disposant d'un poste de commande automatique, ce dernier comprend un moyen de commande de la position de l'axe axialement et/ou angulairement, et un moyen de commande de l'organe de mesure. De préférence, la transmission des signaux de commande entre le poste de commande et le module de mesure est sans fil, telle qu'une transmission infrarouge.

Conformément à une autre caractéristique, le système comprend un moyen de lecture des données enregistrées sur le module.

L'art antérieur est illustré par US 6065219 qui porte sur un dispositif de mesure des dimensions d'un trou de forage dans le sol. US 6560889 décrit un capteur de mesure de rayon d'un trou de forage. Il comprend un support cylindrique avec des bras pivotant autour d'un axe perpendiculaire à celui du support. L'angle des bras pivotant est mesuré par des aimants du support. Le rayon est déterminé à partir de la mesure de cet angle. US 5205 047 décrit un appareil de mesure des dimensions d'une pièce mécanique comprenant un support mobile en translation avec un capteur mécanique dont on mesure les déplacements transversaux. GB 2259770 décrit un appareil de mesure automatique de diamètres intérieurs. Il comprend une tête de mesure avec des capteurs de position. La tête est guidée en trois dimensions de façon à suivre la surface intérieure des trous que l'on veut mesurer. US 6 412 187 décrit un système de mesure de cote interne d'une cavité utilisant un organe de mesure monté de manière amovible sur un support mobile en translation à l'intérieur de la cavité.

D'autres caractéristiques ressortiront de la description qui suit d'un mode de réalisation non limitatif du procédé de l'invention accompagnée des dessins annexés sur lesquels
La figure 1 représente un module de mesure conformément à l'invention placé à l'intérieur d'un arbre de turbine creux dans une première position,
La figure 2 montre le module à l'intérieur de l'arbre de turbine de la figure en place à l'extrémité distale de l'arbre.
La figure 3 montre plus en détail la partie du module de mesure avec l'organe de mesure par palpage,
La figure 4 montre schématiquement la commande du système de mesure.

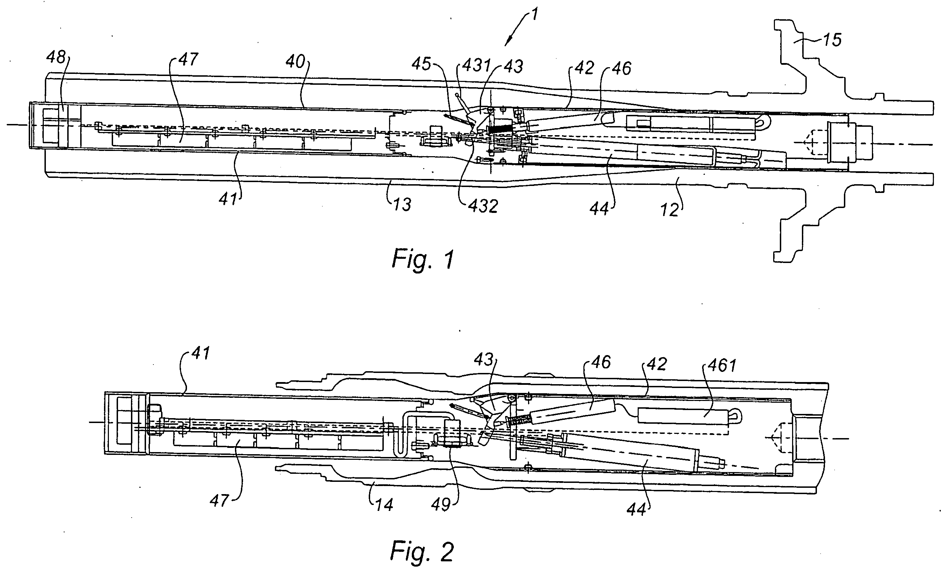

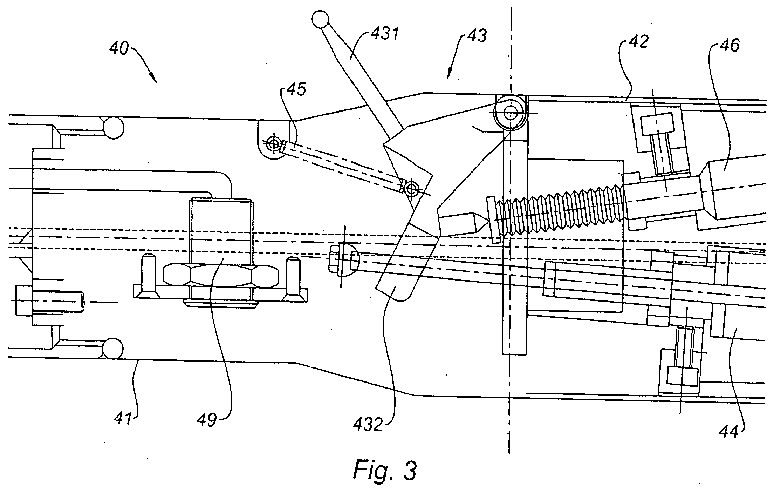

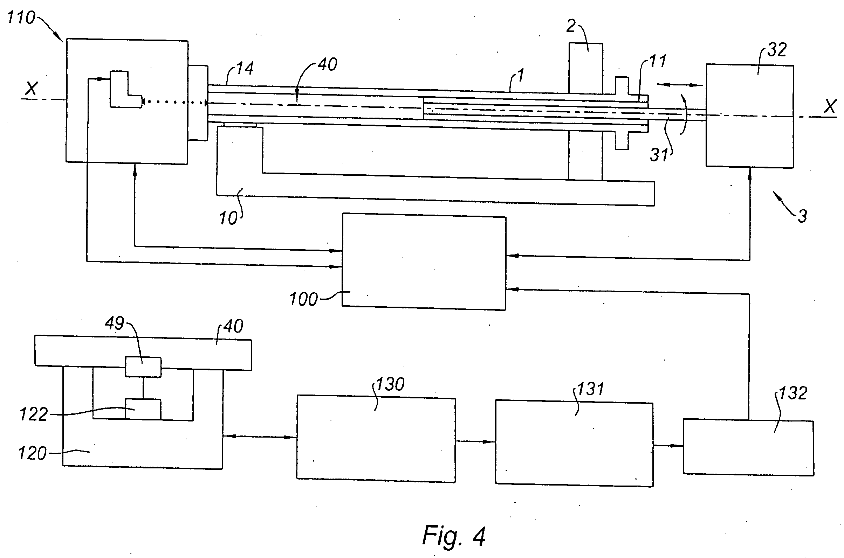

Comme on le voit sur les figures 1 à 4, la pièce dont il s'agit de contrôler les cotes intérieures est ici un arbre de turbine. L'arbre 1 a été fabriqué en forgeant une bille métallique jusqu'à lui donner la forme extérieure voulue. Ensuite la pièce a été usinée extérieurement. Enfin elle a été placée sur un support 2 et usinée par forage depuis une extrémité 11 qui est l'extrémité proximale jusqu'à son extrémité opposée 14, dite distale. La machine d'usinage 3 comprend un axe 31 entraîné en rotation sur lui-même et en translation le long d'un axe XX par un bloc d'entraînement 32 pourvu des moyens moteurs appropriés. Ces éléments sont montrés de façon schématique sur la figure 4.

Pour le forage de l'arbre 1, l'axe 31 est équipé à son extrémité distale d'un outil d'usinage approprié. Il n'est pas représenté, le forage étant terminé.

Les figures 1 et 2 montrent en coupe la géométrie de l'arbre 1. Le diamètre de la cavité centrale n'est pas constant entre les deux extrémités 11 et 14. Ce diamètre est constant sur une première partie d'entrée 11 ; il s'élargit progressivement sur une deuxième partie 12 formant une surface interne tronconique puis reste constant sur une troisième partie 13, la plus longue. Il se rétrécit puis se poursuit avec une forme plus complexe sur une dernière partie 14.

La forme extérieure est sensiblement cylindrique avec une partie 15 en forme de flasque près de l'entrée 11. Ce flasque sert à relier l'arbre au rotor de turbine non visible.

Le système de l'invention a été mis au point pour réaliser le contrôle de la surface de la cavité interne, essentiellement le long des deuxième et troisième parties 12 et 13 dont l'accessibilité est réduite.

Le système de l'invention comprend un module de mesure 40 de forme tubulaire en deux parties 41 et 42. La partie distale 41 est de diamètre légèrement inférieur à celui de la partie proximale 42. Le qualificatif proximale désigne la partie proche de l'ensemble d'entraînement 32. Distale désigne la partie éloignée de l'ensemble d'entraînement 32.

Le diamètre de la partie tubulaire 41 permet son passage à travers l'ouverture de la partie 14 de l'arbre. Le diamètre de la partie 42 permet l'introduction du module 40 par la partie 11 de l'arbre. Il est ici supérieur à l'ouverture de la partie 14. Quand il est logé à l'intérieur de l'arbre, l'axe du module 40 se confond avec l'axe XX de l'arbre. Un moyen de fixation 421 a pour fonction d'assurer un montage amovible du module 40 sur l'axe 31 de la machine 3. Ce moyen est conformé de façon à s'adapter sur l'axe 31 de la même façon que l'outil d'usinage auquel le module vient se substituer.

Le module comprend, dans la zone intermédiaire entre les parties 41 et 42, un organe de mesure par palpage 43 en forme de levier en équerre, articulé autour d'un axe perpendiculaire à l'axe XX. Une branche 431 de l'équerre est pourvue à son extrémité libre d'une bille de palpage ; l'autre branche 432 est reliée à un vérin électrique de traction 44 coopérant en opposition avec un ressort de traction 45. Pour amener l'organe de palpage 43 en position rétractée le vérin est actionné en traction contre la force du ressort 45. Lorsqu'on relâche le vérin, le ressort tire sur la branche 432 ce qui fait sortir la branche 431 avec la bille de palpage de l'enveloppe tubulaire du module 40.

Une règle 46 est reliée également mécaniquement à la branche 432. Sa fonction est de relever avec précision le déplacement de l'organe 43. Dans ce but il est relié électriquement à un moyen d'enregistrement et de stockage de données 461. Un exemple de règle est fourni par la société Heidenhain.

La partie tubulaire 41 contient un accumulateur électrique 47 pour alimenter le vérin 44 en énergie quand celui-ci est activé. Son extrémité libre est pourvue d'une interface 48 de réception de signaux infrarouge transformant les signaux infrarouges respectivement en signal électrique de commande du vérin et d'enregistrement de la valeur relevée par la règle 46.

Le module comprend un moyen de connexion électrique 49 à un moyen extérieur correspondant par lequel l'accumulateur 47 peut être rechargé et les données enregistrées dans les moyens de stockage de données 461 transférées à un moyen de lecture extérieur.

La figure 4 montre le schéma de commande du système le poste de commande 100 de la machine d'usinage est relié à l'ensemble moteur de l'arbre 31 pour piloter celui-ci aussi bien en position axiale qu'en position angulaire autour de l'axe XX . Le poste 100 est aussi relié à un organe de commande par infrarouge 110 qui est disposé sur l'axe XX en vue de l'interface 48.

Le système comprend également un support 120 pour le module de mesure 40, situé à proximité de l'installation d'usinage et de contrôle, sur lequel on peut le placer et mettre son moyen de connexion 49 en prise avec un moyen de connexion correspondant 122 sur le support 120 pour permettre d'une part le rechargement de l'accumulateur 47 et d'autre part la récupération des données présentes dans le moyen de stockage des données 461.

Ce support 120 est relié à un moyen de calcul, tel qu'un ordinateur personnel 130 équipé des logiciels de traitement des données.

Comme on le voit sur la figure, en fonction des résultats de l'analyse des valeurs, il est possible de prévoir la transmission d'une commande d'usinage au poste de commande 100 pour apporter les corrections d'usinage nécessaire. Cette action correctrice est possible parce que l'arbre est présent sur la machine d'usinage. Cela constitue un avantage du système.

Le fonctionnement du système est le suivant.

Après avoir foré intégralement l'arbre 1, on extrait la tête de forage de l'arbre 31 et on en démonte l'outil de forage. L'arbre 1 de turbine ainsi usiné reste en place sur le support 2, pour le contrôle et le relevé de cotes intérieures conformément à l'invention. On remplace l'outil par le module 40 de mesure de l'invention.

Comme on le voit sur la figure, le dispositif comprend un bâti 10 formant support de la pièce 1 à usiner. La pièce 1 est supportée à une extrémité par une lunette 2 dans laquelle elle est glissée et positionnée avec précision dans l'espace. La pièce est supportée dans le sens de la longueur.

Le module de mesure 40 a été monté sur l'arbre 31 de la tête de forage en substitution de l'outil de forage. A l'extrémité du bâti opposée au moyen d'entraînement de la tête de forage, et dans le prolongement de l'axe XX on trouve le système de commande par infrarouge 110 des organes contenus dans la tête de mesure.

Le module de mesure 40 reçoit ainsi les signaux de commande depuis le bloc de commande 100.

Lorsque le module est en place sur la tête de forage, on met en route l'appareil par commande à distance par infrarouge. Le tout est piloté par le poste de commande 100. La première étape consiste à étalonner l'appareil en abscisse X, le long de l'axe XX et en ordonnée Z, perpendiculaire à l'axe XX.

Le poste 100 commande le bloc d'entraînement 32 de manière à mettre le module 40 en position à l'extrémité distale comme sur la figure 2, au maximum de la profondeur.

Par le biais de la commande infrarouge 110 et de l'interface 48, l'organe de mesure 43 est mis en extension. Cette opération résulte de la coupure de l'alimentation électrique du vérin, le ressort de traction 45 faisant alors pivoter la branche 431 hors du module 40. Elle vient en appui par la bille contre la paroi interne de l'arbre. A cette position de l'organe 43 correspond sur la règle 46 une mesure de l'ordonnée Z. Par ailleurs la position axiale X est connue.

Le programme lance la série de mesures en commandant le déplacement du module 40 en direction de l'extrémité proximale 11 sur des points déterminés, successifs, distants axialement par exemple de 0,1 mm, et à différentes positions angulaires, par exemple quatre (0°, 90° 180° et 270°). En ces points définis, on enregistre la valeur Z fournie par la règle 46. Lorsque la série de mesures est terminée, on retire le module 40 de l'arbre et on le place sur le support 120 pour recueillir toutes les données Z stockées dans les mémoires 461. Celles-ci sont transmises à l'ordinateur 130 où elles sont analysées. A partir de ces infirmations, l'opérateur peut prendre les dispositions requises comme par exemple de commander sur le poste de commande 100 comprenant également les moyens de commande numérique de l'usinage, l'usinage extérieur de correction de l'épaisseur du voile.

En d'autres termes, le système a besoin pour fonctionner de logiciels spécifiques pour commander et exploiter els données enregistrées dans le module 40. Ce module 40 est piloté par un logiciel qui reçoit les commandes par infrarouge du bloc 100 ; le bloc 100 commande aussi la synchronisation des cartes horloges entre l'axe 31 et la tête de mesure 40.

Le traitement des données est réalisé en dehors de la machine d'usinage par un ordinateur personnel 130 qui compare le relevé du bloc 40 avec le modèle théorique. Cette comparaison donne une cartographie 131 des cotes relevées en indiquant la valeur des cotes hors tolérances. Ce relevé sert aussi de référentiel 132 au balancement de la pièce en finition, principalement pour l'usinage de la forme extérieure qui doit être concentrique au relevé du module 40.

## Revendications

1. Système de mesure d'une cote interne, telle que le rayon, d'une cavité cylindrique sur une longueur déterminée, creusée dans un arbre (1) creux de turbomachine, comprenant un module de mesure (40) monté de manière amovible sur un support (31) mobile en translation à l'intérieur et le long de l'axe de la cavité, le module (40) comportant un organe de mesure (43) de la cote délivrant des signaux correspondant aux valeurs mesurées et incorporant un moyen (461) d'enregistrement et de stockage desdites valeurs, **caractérisé par le fait que** le support mobile (31) est l'axe adapté pour former le support de la tête de forage d'une machine d'usinage (3) par laquelle ladite cavité cylindrique a été creusée.

2. Système selon la revendication précédente dont le module (40) comprend un organe de palpage mécanique (43) mobile entre une position rétractée et une position en extension de palpage de la surface interne de la cavité.

3. Système selon la revendication précédente dont l'organe de palpage (43) est mis en position par des moyens de commande dont l'alimentation en énergie est incorporée au dit module de mesure (40).

4. Système selon la revendication précédente comprenant un poste de commande automatique (100) de la machine d'usinage comprenant un moyen de commande de la position de l'axe axialement et/ou angulairement,

5. Système selon la revendication précédente dont le poste de commande (100) comprend un moyen de commande de l'organe de mesure.

6. Système selon la revendication précédente dont la transmission est effectué sans fil, notamment par rayon infrarouge.

7. Système selon l'une des revendications précédentes comprenant un moyen de lecture (120) des données enregistrées sur le module (40).

## Patentansprüche

1. Messsystem eines inneren Maßes, wie zum Beispiel des Radius, eines zylindrischen Hohlraums auf einer vorbestimmten Länge, die in einer Hohlwelle (1) einer Turbomaschine ausgehöhlt ist, das ein Meßmodul (40) umfasst, das abnehmbar auf einem in Verschiebung im Inneren und entlang der Achse des Hohlraums beweglichen Träger (31) montiert ist, wobei das Modul (40) ein Meßorgan (43) des Maßes umfasst, das Signale liefert, die den Messwerten entsprechen und ein Mittel (461) zum Aufzeichnen und Speichern der Werte umfasst, **dadurch gekennzeichnet, dass** der bewegliche Träger (31) die Achse ist, die angepasst ist, um den Träger des Bohrkopfes einer Bearbeitungsmaschine (3), durch die der zylindrische Hohlraum ausgehöhlt wurde, zu bilden.

2. System nach dem vorhergehenden Anspruch, dessen Modul (40) ein mechanisches Abtastorgan (43) umfasst, das zwischen einer eingezogenen Position und einer gestreckten Abtastposition der inneren Oberfläche des Hohlraums beweglich ist.

3. System nach dem vorhergehenden Anspruch, dessen Abtastorgan (43) von Steuermitteln in Position, deren Energieversorgung in das Meßmodul (40) eingebaut ist, gestellt wird.

4. System nach dem vorhergehenden Anspruch, das einen automatischen Steuerposten (100) der Bearbeitungsmaschine umfasst, der ein Steuermittel der Position der Achse axial und/oder winkelig umfasst.

5. System nach dem vorhergehenden Anspruch, dessen Steuerposten (100) ein Steuermittel des Messorgans umfasst.

6. System nach dem vorhergehenden Anspruch, dessen Übertragung drahtlos, insbesondere durch Infrarotstrahl, ausgeführt wird.

7. System nach einem der vorhergehenden Ansprüche, das ein Lesemittel (120) der auf dem Modul (40) aufgezeichneten Daten umfasst.

## Claims

1. A system for measuring an internal dimension, such as the radius, of a cylindrical cavity over a determined length, hollowed in a turbomachine hollow shaft (1), comprising a measurement module (40) mounted removably on a support (31) that has translational mobility inside and along the axis of the cavity, the module (40) comprising a measurement component (43) for measuring the dimension and delivering signals corresponding to the measured values and incorporating a recording and storage means (461) for recording and storing said values, **characterized in that** the mobile support (31) is the arbor adapted to act as a support for the boring head of a machine tool (3), the one used to hollow out said cavity.

2. The system as claimed in the preceding claim in which the module (40) comprises a measurement component (43) of the mechanical sensor type able to move between a retracted position and an extended position for sensing the internal surface of the cavity.

3. The system as claimed in the preceding claim in which the measurement component (43) is placed in position by control means, the power supply of which is built into said measurement module (40).

4. The system as claimed in the preceding claim comprising an automatic control station (100) for controlling the machine tool comprising a control means for controlling the position of the arbor axially and/or angularly.

5. The system as claimed in the preceding claim in which the control station (100) comprises a control means for controlling the measurement component.

6. The system as claimed in the preceding claim in which the transmission is of the wireless type, particularly using infrared beams.

7. The system as claimed in one of the preceding claims, comprising a data reading means (120) for reading the data recorded in the module (40).
